# EUROPÄISCHE PATENTSCHRIFT

(11) **EP 2 494 279 B1**
(45) Veröffentlichungstag und Bekanntmachung des Hinweises auf die Patenterteilung: **30.04.2014**
(21) Anmeldenummer: 10770824.0
(22) Anmeldetag: 26.10.2010
(51) Int. Cl.: F24J 2/05, F24J 2/14, F24J 2/46, F24J 2/24

(54) **ABSORBERROHR UND VERFAHREN ZUM REVERSIBLEN BE- UND ENTLADEN EINES GETTERMATERIALS**
ABSORBER TUBE AND METHOD FOR THE REVERSIBLE LOADING AND UNLOADING OF A GETTER MATERIAL
TUBE ABSORBEUR ET PROCÉDÉ DE CHARGE ET DE DÉCHARGE RÉVERSIBLES D'UN MATÉRIAU GETTER

(30) Priorität: 27.10.2009 DE 102009046064
(43) Veröffentlichungstag der Anmeldung: 05.09.2012
(73) Patentinhaber: Schott Solar AG, 55122 Mainz (DE)
(72) Erfinder: KUCKELKORN, Thomas, 07743 Jena (DE)
(74) Vertreter: Mehler Achler
(86) Internationale Anmeldenummer: PCT/EP2010/066191
(87) Internationale Veröffentlichungsnummer: WO 2011/051298

(56) Entgegenhaltungen:
- EP-A1- 0 053 852
- DE-A1- 2 635 262
- DE-A1- 2 933 901
- DE-B3-102005 022 183
- DE-B3-102005 057 276
- US-A1- 2004 134 484
- US-A1- 2010 126 499

## Beschreibung

Die vorliegende Erfindung betrifft ein Absorberrohr, insbesondere für Sonnenkollektoren in solarthermischen Kraftwerken, umfassend ein Metallrohr zum Durchleiten und Erhitzen eines Wärmeträgermediums, ein das Metallrohr umgebendes Hüllrohr zum Ausbilden eines evakuierbaren Ringraumes, eine zwischen dem Hüllrohr und dem Metallrohr verlaufende Wandung zum Abdichten des Ringraumes, und ein Gettermaterial zum Binden von sich im Ringraum befindendem freien Wasserstoff. Weiterhin betrifft die Erfindung ein Verfahren zum reversiblen Be- und Entladen eines Gettermaterials mit freiem Wasserstoff. Ferner betrifft die Erfindung eine Vorrichtung zum Abführen von freiem Wasserstoff aus einem Ringraum eines Absorberrohres sowie ein entsprechendes Verfahren.

Sonnenkollektoren können beispielsweise mit einem Parabolspiegel, auch Kollektorspiegel genannt, ausgestattet werden und in so genannten Parabolrinnen-Kraftwerken eingesetzt werden. In bekannten Parabolrinnen-Kraftwerken wird als Wärmeträgermedium ein Thermoöl eingesetzt, das mithilfe der von den Parabolspiegeln reflektierten und auf das Absorberrohr fokussierten Sonnenstrahlen bis ca. 400°C erhitzt werden kann. Das Absorberrohr besteht dabei in der Regel aus einem Metallrohr, welches eine strahlungsabsorbierende Schicht aufweist und einem typischerweise aus Glas bestehendem Hüllrohr, weiches das Metallrohr umgibt. Das erhitzte Wärmeträgermedium wird durch das Metallrohr durchgeleitet und beispielsweise einer Vorrichtung zum Erzeugen von Wasserdampf zugeführt, mit dem in einem thermischen Prozess die Wärmeenergie in elektrische Energie umgewandelt wird. Das Metallrohr und das Hüllrohr verlaufen parallel und konzentrisch zueinander. Zwischen dem Metallrohr und dem Hüllrohr wird ein Ringraum gebildet, der axial durch eine Wandung abgedichtet wird, die üblicherweise aus Metall besteht. Die einzelnen Absorberrohre sind bis zu 4 m lang und werden zu Solarfeldschleifen mit einer Gesamtlänge bis zu 200 m zusammengeschweißt. Derartige Absorberrohre sind beispielsweise aus der DE 102 31 467 B4 bekannt.

Das als Wärmeträgermedium verwendete Thermoöl setzt mit zunehmender Alterung freien Wasserstoff frei, der im Thermoöl gelöst ist. Die Menge des freiwerdenden Wasserstoffes hängt zum einen vom verwendeten Thermoöl und von der Pflege des Thermoöls durch den Betreiber, zum anderen aber auch von der Menge Wasser, welches mit dem Thermoöl in Berührung kommt, ab. Der freigewordene Wasserstoff gelangt infolge von Permeation durch das Metallrohr hindurch in den evakuierten Ringraum, wobei die Permeationsrate durch das Metallrohr mit steigender Betriebstemperatur des Metallrohres ebenfalls zunimmt. Als Folge davon steigt auch der Druck im Ringraum, was ab einem Druck zwischen 0,0001 mbar und 0,001 mbar eine Erhöhung der Wärmeleitung durch den Ringraum zur Folge hat, die wiederum zu erhöhten Wärmeverlusten und zu einem geringeren Wirkungsgrad des Absorberrohres bzw. des Sonnenkollektors führt.

Um den Druckanstieg im Ringraum zu vermeiden und damit die Lebensdauer des Absorberrohres zu verlängern, kann der in den Ringraum gelangte Wasserstoff durch sogenannte Gettermaterialien gebunden werden. Die Aufnahmekapazität der Gettermaterialien ist aber begrenzt. Nach Erreichen der Kapazitätsgrenze steigt der Druck im Ringspalt solange an, bis er im Gleichgewicht mit dem im freien, aus dem Thermoöl gelösten Wasserstoff ist. Der Gleichgewichtsdruck beträgt nach bisherigen Untersuchungen einige mbar. Durch den Wasserstoff entsteht eine erhöhte Wärmeleitung im Ringspalt mit den oben genannten nachteiligen Folgen für den Wirkungsgrad des Sonnenkollektors. Absorberrohre, welche im Ringraum mit Gettermaterialien versehen sind, sind beispielsweise aus der WO 2004/063640 A1 bekannt.

Aus der DE 10 2005 057 276 B3 ist ein Absorberrohr bekannt, bei dem Edelgas in den Ringraum eingeleitet wird, wenn die Kapazität des Gettermaterials erschöpft ist. Edelgase weisen eine geringe Wärmeleitfähigkeit auf, so dass die Wärmeleitung durch den Ringspalt trotz der Anwesenheit von freiem Wasserstoff reduziert werden kann.

Bei beiden vorgenannten Vorrichtungen wird der in den Ringraum gelangte freie Wasserstoff nur solange gebunden, bis die Aufnahmekapazität des Gettermaterials erschöpft ist. Die Menge an in den Ringraum einleitbaren Edelgas gemäß der DE 10 2005 057 276 B3 ist ebenfalls begrenzt, so dass beide Maßnahmen die Lebensdauer des Absorberrohres nur in bestimmten Grenzen erhöhen können.

Die EP 0 286 281 A1 zeigt ein Absorberrohr, welches eine Membran umfasst, durch welche freier Wasserstoff aus dem Ringraum nach außen transportiert werden kann, um die Konzentration von freiem Wasserstoff im Ringraum gering zu halten.

Die DE 29 33 901 A1 offenbart einen Sonnenkollektor, bei dem innerhalb des Glashüllrohrs ein Gettermaterial angeordnet ist. In der Nähe des Gettermaterials ist ebenfalls ein innerhalb des Glashüllrohrs angeordneter Glühkörper angeordnet, der auf eine Temperatur von 300 bis 200 °C zu Cracken von Restgas gebracht werden kann.

Die DE 10 2005 022 183 B3 offenbart ein Absorberrohr mit einer Dehnungsausgleichseinrichtung zwischen dem Metallrohr und dem Glashüllrohr. Das Anschlusselement der Dehnungsausgleichseinrichtung weist ein Wasserstofffenster auf. Im Innern des Absorberrohrs ist ein Gettermaterial angeordnet, dessen Aktivierung auch durch Erwärmen von außen erfolgen kann.

Die DE 26 35 262A1 offenbart einen Sonnenkollektor, der ein wasserstoffaufnehmendes und wasserstoffabgebendes Material aufweist. Mittels einer an- und abschaltbaren Heizeinrichtung wird die Wasserstoffaufnahme bzw. Wasserstoffabgabe des Materials gesteuert.

Aufgabe der vorliegenden Erfindung ist es daher, ein Absorberrohr anzugeben, welches im Vergleich zu den aus dem Stand der Technik bekannten Absorberrohren eine erhöhte Lebensdauer aufweist.

Gelöst wird die Aufgabe durch ein Absorberrohr der eingangs genannten Art, das gekennzeichnet ist durch eine Temperaturänderungsvorrichtung zum Ändern der Temperatur des Gettermaterials und der Wandung und durch eine für den freien Wasserstoff durchdringbare Membran zum Abführen des freien Wasserstoffes aus dem Ringraum, wobei die Temperaturänderungsvorrichtung die Temperatur der Membran ändert.

Unter der Temperaturänderungsvorrichtung soll dabei jede Vorrichtung verstanden werden, die in der Lage ist, eine Änderung, sowohl eine Erhöhung als auch eine Verringerung, der Temperatur des Gettermaterials und/oder der Wandung zu bewirken.

Die Aufnahmekapazität des Gettermaterials für freien Wasserstoff ist temperaturabhängig. Bei den üblicherweise verwendeten Gettermaterialien steigt die Aufnahmekapazität mit sinkender Temperatur. Erfindungsgemäß ist es daher möglich, durch Kühlen des Gettermaterials die Aufnahmekapazität im Betrieb des Absorberrohres zu erhöhen. Bei Wahl eines geeigneten Materials steigt andererseits die Permeationsrate des freien Wasserstoffes durch die Wandung mit zunehmender Temperatur der Wandung stark an, während die Wandung bei den üblicherweise im Betrieb herrschenden Temperaturen den Ringraum gasdicht abschließt.

Ist die Aufnahmekapazität des Gettermaterials erschöpft und kann sie zweckmäßigerweise nicht mehr durch Kühlen gesteigert werden, wird erfindungsgemäß die Temperatur des Gettermaterials und der Wandung mittels der Temperaturänderungsvorrichtung erhöht. Das Gettermaterial gibt aufgrund seiner nun sinkenden Aufnahmekapazität freien Wasserstoff in den Ringraum ab, der nun durch die Wandung hindurch und aus dem Ringraum heraus diffundieren kann. Dieser Diffusionsvorgang wird dadurch unterstützt, dass der Druck im Ringraum mit steigender Konzentration von freiem Wasserstoff steigt.

Sobald der vom Gettermaterial abgegebene Wasserstoff aus dem Ringraum abgeführt worden ist, wird die Temperatur wieder auf den ursprünglichen Wert, nämlich auf die Betriebstemperatur, gesenkt, so dass sich die Permeationsrate durch die Wandung wieder verringert und die Aufnahmekapazität des Gettermaterials für Wasserstoff ansteigt. Nun kann wieder neu vom Wärmeträgermedium abgegebener und in den Ringraum gelangter freier Wasserstoff vom Gettermaterial gebunden werden, bis dass die Aufnahmekapazität erschöpft ist. Dann wird die oben beschriebene Temperaturänderung erneut durchgeführt. Dieser Prozess kann beliebig oft wiederholt werden, so dass die Lebensdauer des Absorberrohres deutlich gesteigert werden kann, was den Betrieb von solarthermischen Kraftwerken spürbar effizienter macht.

Das Gettermaterial wird üblicherweise zu zylinderförmigen Portionen zusammengepresst (Pillen). Bei der Beladung des Gettermaterials mit Wasserstoff bilden sich Hydride, die zu einer Volumenänderung und damit zu einer Partikelbildung führen. Erfindungsgemäß ist es möglich, die Temperaturänderung und die Entladung des Gettermaterials bereits vor Erreichen des kritischen Beladungsgrades vorzunehmen, um der Partikelbildung des Gettermaterials vorzubeugen. Die Partikelbildung ist deshalb nachteilig, da sich zumindest kleinere Partikel, die nicht zurückgehalten werden können, frei im Ringraum bewegen können und dort zu lokalen Temperaturerhöhungen (hot spots) führen oder als Staubbelag die Transmission verschlechtern, was sich nachteilig auf die Lebensdauer und den Wirkungsgrad des Absorberrohres auswirkt.

Es ist eine für den freien Wasserstoff durchdringbare Membran zum Abführen des freien Wasserstoffes aus dem Ringraum vorgesehen. Die Membran ist für andere Gassorten undurchlässig. Die Membran besteht vorzugsweise aus Palladium, Niob oder reinem Eisen bzw. aus Legierungen, in denen die genannten Werkstoffe enthalten sind. Sie kann zusätzlich durch eine geeignete Beschichtung vor Korrosion geschützt werden. Die Membran kann in die Wandung eingesetzt und so ausgestaltet werden, dass die Temperaturabhängigkeit der Permeationsrate des Wasserstoffs auf die im Betrieb des Absorberrohres herrschenden Temperaturen hin optimiert ist..Palladium-Membranen passivieren unter 200°C. Durch Erwärmen kann die Membran aktiviert werden. Bei bisher bekannten Lösungen wurden Membranen in die Glashülle oder in den Übergangsbereich zwischen Glas und Metallfaltenbalg integriert (siehe EP286281 bzw. US4892142). Dabei soll die Membran für eine kontinuierliche Permeation des Wasserstoffes bei geringem Differenzdruck (<0,0001 mbar im Ringspalt, 0,00005 mbar in der Atmosphäre) aus dem Ringspalt in die Atmosphäre dienen. Diese Lösungen haben den Nachteil, dass die Temperatur der Membran nicht definiert ist. Dadurch kann einerseits eine Passivierung bei Unterschreitung der kritischen Temperaturgrenze der Membran erfolgen, wodurch der Innendruck ansteigt. Anderseits kann durch direkte Bestrahlung eine zu starke Erwärmung auftreten, die zu hohen Spannungen im Glas bzw. im Übergangsbereich führt und den Bruch des Hüllrohres auslöst. Die hohe Bruchrate dieser Ausführungsform ist aus dem Betrieb des Kraftwerkes Kramer Junction in Kalifornien bekannt. Wird eine Membran gewählt, die eine sehr stark temperaturabhängige Permeationsrate aufweist, reicht eine geringe Erhöhung der Membrantemperatur aus, um den freien Wasserstoff aus dem Ringraum abzuführen, ohne dass Gase von außen in den Ringraum eindringen. Der energetische Aufwand für die Erwärmung kann daher gering gehalten werden.

Die Temperaturänderungsvorrichtung ändert die Temperatur der Membran. In dem zuvor beschriebenen Ausführungsbeispiel wird die Temperatur der Membran über eine Änderung der Wandungstemperatur verändert, es findet dort also eine indirekte Änderung der Membrantemperatur durch Wärmeleitung von der Wandung in die Membran statt. In diesem Ausführungsbeispiel wird die Temperatur der Membran direkt verändert, was energetisch vorteilhaft ist. Die Temperatur des Gettermaterials wird indirekt über die Membran verändert. Es findet also eine Temperaturänderung von der Temperaturänderungsvorrichtung über die Membran hin zum Gettermaterials statt.

In einer bevorzugten Ausgestaltung der vorliegenden Erfindung, bei der das Gettermaterial im Ringraum angeordnet ist, ist die Temperaturänderungsvorrichtung außerhalb des Ringraums und gegenüber dem Gettermaterial angeordnet. Mithilfe der Anordnung der Temperaturänderungsvorrichtung außerhalb des Ringraumes ist sie gut zugänglich, so dass sie einfach montiert und repariert werden kann, ohne in den Ringraum eingreifen zu müssen. Die Anordnung des Gettermaterials im Ringraum gegenüber der Temperaturänderungsvorrichtung gewährleistet, dass die vorgenommenen Temperaturänderungen auch tatsächlich auf das Gettermaterial einwirken.

In einem bevorzugten Ausführungsbeispiel, bei dem die Wandung ein Übergangselement und einen Außenring umfasst, ist die Membran im oder am Übergangselement und/oder dem Außenring angeordnet. Übergangselemente und Außenringe sind üblicher Bestandteil von bekannten Dehnungsausgleichsvorrichtungen, mit denen die unterschiedliche Ausdehnung des Hüllrohres und des Metallrohres ausgeglichen und der Ringraum im Betrieb des Absorberrohres gasdicht abgeschlossen wird. Es ist nicht notwendig, den gesamten Außenring oder das gesamte Übergangselement als Membran zu fertigen, vielmehr reicht hierzu ein bestimmter Abschnitt, wodurch die Herstellungskosten verringert werden können. Ferner können handelsübliche Dehnungsausgleichsvorrichtungen verwendet werden, die nur mit der Membran versehen werden muss, so dass der fertigungstechnische Mehraufwand gering ist.

In einer weiterhin bevorzugten Ausgestaltung der vorliegenden Erfindung, in der das Absorberrohr einen Faltenbalg zum Ausgleichen der unterschiedlichen Ausdehnungen des Hüllrohres und des Metallrohres aufweist, ist die Membran im oder am Faltenbalg angeordnet. Auch hierdurch kann eine kostengünstige Realisierung des erfinderischen Prinzips erreicht werden.

Vorzugsweise besteht die Membran aus Eisen, Palladium oder Niob. Diese drei Elemente zeichnen sich durch eine für die im Betrieb des Absorberrohres herrschenden Bedingungen geeignete Temperaturabhängigkeit ihrer Wasserstoff-Permeationsrate aus.

Vorteilhafterweise umfassen der Faltenbalg und/oder die Wandung einen dotierten Bereich zum Erhöhen der Permeabilität für freien Wasserstoff. Hier können beispielsweise Palladiumatome in den Grundwerkstoff des Faltenbalges oder der Wandung eingebracht werden. Die Dotierungsverfahren können heutzutage kostengünstig durchgeführt werden, beispielsweise mittels Diffusion, Sublimation aus der Gasphase oder Beschuss mittels hochenergetischen Teilchenkanonen unter Vakuum. Bei der Dotierung werden nur sehr geringe Mengen von Fremdatomen in den Grundwerkstoff eingebracht, was aber ausreicht, um die Permeationsrate stark zu beeinflussen. Die Menge an eingesetztem Palladium oder Niob kann daher sehr gering gehalten und eine Kostenersparnis erzielt werden, welche die Kosten des zusätzlichen Dotierungsverfahrens überwiegt.

In einer weiteren Fortbildung der Erfindung ist das Gettermaterial in einen Behälter gefüllt, der am Außenring und/oder am Übergangselement befestigt ist. Das Gettermaterial ist üblicherweise zu Pillen zusammengepresst. Mit zunehmender Beladung des Gettermaterials mit freiem Wasserstoff bilden sich Hydride, welche das die zylinderförmigen Stücke zerstören, so dass diese in viele kleine Partikel zerfallen. Zwar kann sich auch weiterhin freier Wasserstoff an das Gettermaterial anlagern und die Aufnahmekapazität des Gettermaterials wird nicht verändert. Allerdings verteilen sich die kleinen Partikel unkontrolliert im Ringraum, wo sie von den reflektierten Sonnenstrahlen erwärmt werden und lokale Hotspots im Ringraum bilden, was sich negativ auf den Wärmeertrag und die Lebensdauer des Absorberrohres bemerkbar macht. Mithilfe des Behälters ist das Gettermaterials dauerhaft an einem Ort fixiert, so dass die oben genannten Nachteile nicht auftreten. Insbesondere kann das Gettermaterial auch in Pulverform verwendet werden. Ferner lassen sich die Behälter vor der Montage bereits außerhalb des Ringraums mit dem Gettermaterial befüllen, so dass die befüllten Behälter nur noch in den Ringraum eingesetzt werden müssen, weshalb die Fertigung des Absorberrohres vereinfacht wird. Ebenfalls können sie schon vor dem Zusammenbau des Absorberrohres mit dem Außenring oder dem Übergangselement verbunden werden, etwa durch Heften oder Löten.

Bevorzugt weist der Behälter Löcher zum Erhöhen der Zugänglichkeit des Gettermaterials für den freien Wasserstoff im Ringraum auf. Diese Löcher können gelaserte Mikrolöcher sein, durch welche der Wasserstoff einfach, das Gettermaterial aber nicht hindurch gelangen kann. Auf diese Weise kann sich der Wasserstoff gut am Gettermaterial anlagern und sich von diesem wieder entfernen, ohne dass sich das Gettermaterial, insbesondere in Pulverform, unkontrolliert im Ringraum verteilen könnte.

In einer vorteilhaften Ausgestaltung ist der Behälter als Gewebestrumpf ausgebildet. Der Gewebestrumpf ist flexibel und kann ohne weitere Befestigungsvorrichtungen in den Ringraum eingelegt werden. Vorteilhaft hierbei ist, dass er im gestreckten Zustand mit dem Gettermaterial befüllt, im Ringraum aber im gebogenen Zustand montiert werden kann. Hierzu weist der Gewebestrumpf an seinen beiden Enden eine verschließbare Verbindungsvorrichtung auf, mit welcher er zum Beispiel um den Faltenbalg gelegt werden kann, wo er durch Reibung fixiert wird. Ein bestimmter Einbauort muss nicht eingehalten werden, vielmehr kann der Gewebestrumpf an beliebigen Stellen im Ringraum angeordnet werden.

Vorzugsweise weist der Außenring einen in das Gettermaterial hineinragenden Vorsprung auf und die Temperaturänderungsvorrichtung ist im Bereich des Vorsprungs angeordnet. Auf diese Weise wird die für die Wärmeübertragung nutzbare Fläche vergrößert, so dass sich die Temperaturänderungen des Gettermaterials effektiver gestalten lassen.

In einer bevorzugten Weiterbildung der vorliegenden Erfindung weist der Außenring eine Ausnehmung im Bereich des Vorsprungs auf, in welcher die Temperaturänderungsvorrichtung verläuft. Diese Ausgestaltung ermöglicht es, die Wärmequelle oder Wärmesenke sehr nah an das Gettermaterial zu bringen, so dass sich die Wärmeübertragung weiter optimieren lässt.

Das erfindungsgemäße Absorberrohr wird dadurch fortgebildet, dass der Außenring eine in das Gettermaterial weisende Öffnung aufweist, die durch die Membran verschlossen ist. Die Membran kann dabei in der Öffnung selbst angeordnet oder als die Öffnung verschließende Kappe ausgebildet sein. In dieser Fortbildung kann die Membran bereits auf die Dimensionen der Öffnung angepasst werden, so dass sie nur noch auf sie aufgeschoben oder in sie hineingesteckt werden muss, was aus fertigungstechnischer Sicht vorteilhaft ist.

In einer bevorzugten Ausgestaltung der vorliegenden Erfindung weist der Außenring und/oder das Übergangselement einen Abschnitt auf, der das Gettermaterial zumindest teilweise umschließt. Auf diese Weise wird die für die Wärmeübertragung nutzbare Fläche vergrößert, so dass sich die Temperaturänderungen des Gettermaterials effektiver gestalten lassen. Der Abschnitt kann vom Ringraum aus gesehen nach außen gewölbt sein, so dass die für die Wärmeübertragung von der oder in die Umgebung des Absorberrohres nutzbare Fläche vergrößert wird.

Vorzugsweise ist die Membran im Abschnitt angeordnet. Hierdurch kann der Transport des freien Wasserstoffes, welcher vom Gettermaterial abgegeben wird, effektiv aus dem Ringraum abgeführt werden.

Vorzugsweise grenzt die Temperaturänderungsvorrichtung an den Abschnitt an. Hierdurch kann die von der Temperaturänderungsvorrichtung erzeugten Temperaturänderungen über die durch den Abschnitt für die Wärmeübertragung vergrößerte Fläche genutzt werden, so dass sich die Temperatur des Gettermaterials auf eine sehr effektive Weise ändern lässt.

In einer weiteren Ausgestaltung der vorliegenden Erfindung, in welcher der Faltenbalg einen oder mehrere Falten aufweist, verläuft die Temperaturänderungsvorrichtung zumindest teilweise in den Falten des Faltenbalges. Der hierzu notwendige Fertigungsaufwand ist gering, ferner werden keine nennenswerten zusätzlichen Befestigungsmaßnahmen benötigt. Da der Faltenbalg zumindest teilweise an den Ringraum angrenzt, ist hier eine effektive Änderung der Temperatur des Gettermaterials möglich.

Vorzugsweise ist die Temperaturänderungsvorrichtung als Heizvorrichtung ausgeführt. Zwar ist in dieser Ausgestaltung keine Kühlung der Membran oder der Wandung möglich, dennoch kann der erfindungsgemäße Be- und Entladungsprozess des Gettermaterials mit technisch einfachen und handelsüblichen Mitteln effizient durchgeführt werden.

Bevorzugt umfasst die Heizvorrichtung einen Heizdraht. Ein Heizdraht hat den Vorteil, dass er flexibel verlegt und den geometrischen Verhältnissen am Absorberrohr angepasst werden kann. Insbesondere lässt er sich gut in der Ausnehmung des Außenrings verlegen.

In einer favorisierten Ausgestaltung des erfindungsgemäßen Absorberrohres umfasst die Heizvorrichtung eine elektrische Spule und eine Metallscheibe zum induktiven Beheizen des Gettermaterials. Da der Ringraum gasdicht abgedichtet ist und evakuiert wird, ist es nicht oder nur unter unverhältnismäßig hohem Aufwand möglich, Leitungen und Drähte von außen in den Ringraum zu führen, ohne die Dichtigkeit zu gefährden. Mit der elektrischen Spule kann die Metallscheibe berührungslos induktiv beheizt werden, unabhängig davon, ob sich die Metallscheibe im oder außerhalb des Ringraums befindet. Bei einer entsprechenden Anordnung der Metallscheibe ist es möglich, das Gettermaterial direkt zu beheizen, so dass nun die Membran indirekt beheizt wird. In diesem Fall findet also eine Temperaturänderung von der Temperaturäriderungsvorrichtung über das Gettermaterial hin zur Membran statt.

Vorzugsweise umfasst die Temperaturänderungsvorrichtung eine Heat-Pipe und/oder ein Photovoltaik-Modul. In dieser Ausführung lässt sich einerseits die Wärme über längere Distanzen transportieren. So ermöglichen sie, die Wärme an beliebigen Stellen zu produzieren und dorthin zu führen, wo sie benötigt wird. Anders herum können sie auch Wärme von Stellen abführen, die gekühlt werden müssen. Dies hat konstruktive Vorteile, da die Temperaturänderungsvorrichtung nicht unmittelbar am Absorberrohr angeordnet sein muss, wodurch Probleme, die sich aus mangelndem Bauraum ergeben, umgangen werden können. Mit einem Photovoltaik-Modul kann weiterhin Wärme auf eine günstige und umweltfreundliche Weise bereitgestellt werden.

In einer besonders bevorzugten Ausgestaltung des Absorberrohres umfasst die Temperaturänderungsvorrichtung eine Kühlvorrichtung. Der Vorteil hierbei ist, dass aktiv Wärme aus dem Absorberrohr abgeführt und die Temperatur des Gettermaterials eingestellt werden kann.

Ein weiterer Aspekt der Erfindung betrifft ein Verfahren zum reversiblen Be- und Entladen eines Gettermaterials mit freiem Wasserstoff in einem Absorberrohr, umfassend folgende Schritte:
- Beladen des Gettermaterials bei einer ersten Temperatur,
- Ändern der Temperatur des Gettermaterials auf eine zweite Temperatur mittels einer Temperaturänderungsvorrichtung,
- Entladen des Gettermaterials bei der zweiten Temperatur, und
- Ändern der Temperatur des Gettermaterials auf die erste Temperatur mittels der Temperaturänderungsvorrichtung.

Dieses Verfahren kann beliebig oft angewendet werden, so dass das Gettermaterial wiederholt und damit deutlich effektiver genutzt werden kann, als es bei aus dem Stand der Technik bekannten Absorberrohren bekannt ist, bei denen das Gettermaterial nur einmalig bis zur Erschöpfung der Aufnahmekapazität für freien Wasserstoff beladen wird. Die Lebensdauer des Absorberrohres kann mithilfe des erfindungsgemäßen Verfahrens deutlich verlängert werden, weshalb die solarthermischen Kraftwerke effektiver betrieben werden können.

Bei den üblicherweise verwendeten Gettermaterialien nimmt die Aufnahmekapazität für freien Wasserstoff mit ansteigender Temperatur ab. Eine Entladung wird daher durch eine Erhöhung der Temperatur des Gettermaterials bewirkt. Folglich ist üblicherweise die zweite Temperatur höher als die erste Temperatur. Die erste Temperatur ist dabei meist die am Einbauort des Gettermaterials herrschende Betriebstemperatur des Absorberrohres. Die erste Temperatur kann dabei aber durch die Temperaturänderungsvorrichtung unter die Betriebstemperatur des Absorberrohres gebracht werden, so dass die Aufnahmekapazität des Gettermaterials weiter erhöht wird.

Ein weiterer Aspekt dieser Erfindung betrifft ein Verfahren zum Ändern der Temperatur eines Gettermaterials in einem Ringraum eines Absorberrohres, umfassend folgende Schritte:
- Ändern der Temperatur einer Membran oder einer Wandung mittels einer Temperaturänderungsvorrichtung, und
- Ändern der Temperatur des Gettermaterials mittels der Membran.

In diesem Fall erfolgt die Änderung der Temperatur des Gettermaterials entlang des Weges von der Temperaturänderungsvorrichtung über die Membran und/oder der Wandung zum Gettermaterial. Das Gettermaterial wird daher indirekt unter Zwischenschaltung der Membran und/oder der Wandung beheizt.

Ein weiterer Aspekt betrifft ein Verfahren zum Ändern der Temperatur einer Membran und/oder einer Wandung eines Absorberrohres, umfassend folgende Schritte:
- Ändern der Temperatur eines Gettermaterials mittels einer Temperaturänderungsvorrichtung, und
- Ändern der Temperatur der Membran und/oder einer Wandung mittels des Gettermaterials.

In diesem Fall erfolgt die Änderung der Temperatur der Membran und/oder der Wandung entlang des Weges von der Temperaturänderungsvorrichtung über das Gettermaterial zur Membran und/oder Wandung. Das Gettermaterial wird daher indirekt unter Zwischenschaltung der Membran und/oder der Wandung beheizt.

Ein weiterer Aspekt dieser Erfindung betrifft eine Vorrichtung zum Abführen von freiem Wasserstoff aus einem Ringraum eines Absorberrohres, umfassend
- ein Absorberrohr nach einer der vorgenannten Auführungsformen,
- eine Temperaturmesseinheit zum Ermitteln des Temperaturwertes des Hüllrohres, und
- eine Vergleichseinheit zum Vergleichen des ermittelten Temperaturwertes des Hüllrohres mit einem wählbaren kritischen Temperaturwert.

Mit dieser Vorrichtung ist es möglich, die Be- und Entladung des Gettermaterials automatisch ablaufen zu lassen. Die Absorberrohre werden somit immer im optimalen Bereich betrieben und es ist kein Wartungspersonal notwendig, welche die Be- und Entladung überwacht.

Ein noch weiterer Aspekt betrifft ein Verfahren zum Abführen von freiem Wasserstoff aus einem Ringraum eines Absorberrohres, umfassend folgende Schritte:
- Ermitteln des Temperaturwertes des Hüllrohres mittels einer Temperaturmesseinheit,
- Vergleichen des ermittelten Temperaturwertes mit einem wählbaren kritischen Temperaturwert mithilfe einer Vergleichseinheit, und
- Ändern der Temperatur des Gettermaterials und der Wandung und/oder der Membran mit der Temperaturänderungsvorrichtung derart, dass der am Gettermaterial gebundene Wasserstoff freigesetzt und aus dem Ringraum abgeführt wird.

Das erfindungsgemäße Verfahren wird vorzugsweise in der angegebenen Abfolge durchgeführt, jedoch sind auch andere Abfolgen denkbar. Die Vorteile dieses Verfahrens decken sich mit denen, die für die entsprechende erfindungsgemäße Vorrichtung zum Abführen von freiem Wasserstoff aus einem Ringraum eines Absorberrohres diskutiert wurden.

Die Erfindung wird nun in Detail anhand von bevorzugten Ausführungsbeispielen unter Bezugnahme auf die Figuren beschrieben. Es zeigen
- Figur 1: eine schematische Darstellung eines Sonnenkollektors,
- Figur 2: ein Absorberrohr in einer Halbschnittdarstellung, das kein Ausführungs-beispiel dieser Erfindung darstellt,
- Figur 3: ein erstes Ausführungsbeispiel des erfindungsgemäßen Absorberrohres in einer Halbschnittdarstellung,
- Figur 4: ein zweites Ausführungsbeispiel des erfindungsgemäßen Absorberrohres in einer Halbschnittdarstellung,
- Figur 5: ein weiteres Ausführungsbeispiel des erfindungsgemäßen Absorberrohres in einer Halbschnittdarstellung,
- Figur 6: ein weiteres Ausführungsbeispiel des erfindungsgemäßen Absorberrohres in einer Halbschnittdarstellung,
- Figur 7: ein weiteres Ausführungsbeispiel des erfindungsgemäßen Absorberrohres in einer Halbschnittdarstellung
- Figur 8: ein weiteres Ausführungsbeispiel des erfindungsgemäßen Absorberrohres in einer Halbschnittdarstellung, und
- Figur 9: eine graphische Darstellung des Verfahrens zum reversiblen Be- und Entladen eines Gettermaterials mit freiem Wasserstoff.

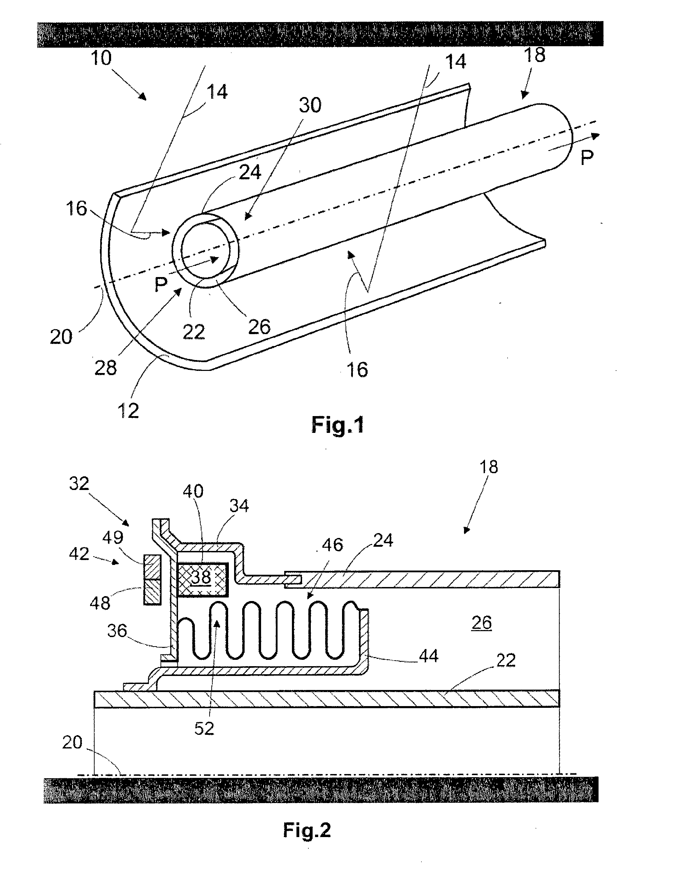

In Figur 1 ist ein Sonnenkollektor 10 der bekannten Art dargestellt. Der Sonnenkollektor 10 umfasst einen Kollektorspiegel 12, welcher die Sonneneinstrahlung 14 reflektiert und die reflektierte Sonneneinstrahlung 16 auf ein Absorberrohr 18 richtet. Der Kollektorspiegel 12 ist rinnenförmig ausgestaltet, so dass er eine Fokussierung der reflektierten Sonnenstrahlung entlang einer Brennlinie bewirkt, durch die eine Längsachse 20 des Absorberrohres 18 verläuft. Das Absorberrohr 18 weist ein Metallrohr 22 und ein Hüllrohr 24 auf. Das Metallrohr 22 ist mit einer strahlungsabsorbierenden Schicht beschichtet und wird von einem Wärmeträgermedium durchströmt. Das Hüllrohr 24 umschließt das Metallrohr 22, so dass ein Ringraum 26 zwischen dem Metallrohr 22 und dem Hüllrohr 24 gebildet wird. Das Hüllrohr 24 besteht typischerweise aus Glas. Aufgrund der rinnenförmigen Ausgestaltung des Kollektorspiegels 12 kann das Absorberrohr 18 in eine dem Kollektorspiegel 12 zugewandte Hälfte 28 und eine ihm abgewandte Hälfte 30 unterteilt werden.

Die Strömungsrichtung des Wärmeträgermediums ist durch die Pfeile P angedeutet. Beim Durchströmen des Metallrohes 22 wird das Wärmeträgermedium durch die reflektierte Sonnenstrahlung 16 erhitzt. Die erreichbare Temperatur beträgt ca. 400°C. Das erhitzte Wärmeträgermedium wird einem hier nicht näher dargestellten Prozess zugeführt, in dem elektrische Energie gewonnen wird. Die dem Kollektorspiegel 12 abgewandte Hälfte 30 des Absorberrohres 18 wird durch Mischkonvektion, also durch natürliche Konvektion, und beispielsweise durch Wind erzwungene Konvektion abgekühlt, was zu Wärmeverlusten führt und daher den Erhitzungsprozess des Wärmeträgermediums verschlechtert. Daher ist man bestrebt, die Wärmeleitung vom Metallrohr 22 nach außen so weit wie möglich zu reduzieren, was mithilfe des mit dem Hüllrohr 24 gebildeten Ringraumes 26 geschieht. Dieser ist evakuiert, wodurch die Wärmeleitung durch den Ringraum 26 verringert wird und damit die Wärmeverluste begrenzt werden.

In Figur 2 ist ein Absorberrohr 18 in einer Halbschnittdarstellung gezeigt, das kein Ausführungsbeispiel der Erfindung darstellt. Das Absorberrohr 18 umfasst eine Wandung 32, welche im dargestellten Ausführungsbeispiel aus einem Übergangselement 34 und einem Außenring 36 besteht, wobei das Übergangselement 34 mit dem Hüllrohr 24 verbunden ist. Diese Wandung 32 schließt den Ringraum 26 in axialer Richtung der Längsachse 20 des Absorberrohres gasdicht ab.

Ein mit einem Gettermaterial 38 befüllter Behälter 40 ist am Außenring 36 befestigt, etwa durch Heften, Löten oder Kleben. Eine Befestigung am Übergangselement 34 wäre ebenfalls realisierbar. Außerhalb des Ringraumes 26 ist benachbart zum Behälter 40 eine Temperaturänderungsvorrichtung 42 angebracht, die so angeordnet ist, dass sie die Temperatur der Wandung 32, im dargestellten Beispiel die Temperatur des Außenrings 36, ändern kann. Hierzu umfasst die Temperaturänderungsvorrichtung 42 eine Heizvorrichtung 48 und eine Kühlvorrichtung 49. Da der Behälter 40 am Außenring 36 befestigt ist, bewirkt die Änderung der Temperatur des Außenrings 36 insbesondere durch Wärmeleitung auch eine Änderung der Temperatur des Gettermaterials 38.

Ferner umfasst das Absorberrohr 18 ein Anschlusselement 44, das mit dem Metallrohr 22 verbunden ist, und einen Faltenbalg 46, der Unterschiede in der Ausdehnung des Hüllrohres 24 und des Metallrohres 22 im Betrieb des Absorberrohres 18 ausgleicht. In dieser Ausführungsform liegt der Außenring 36 am Anschlusselement 44 an, ist aber auf diesem axial verschiebbar.

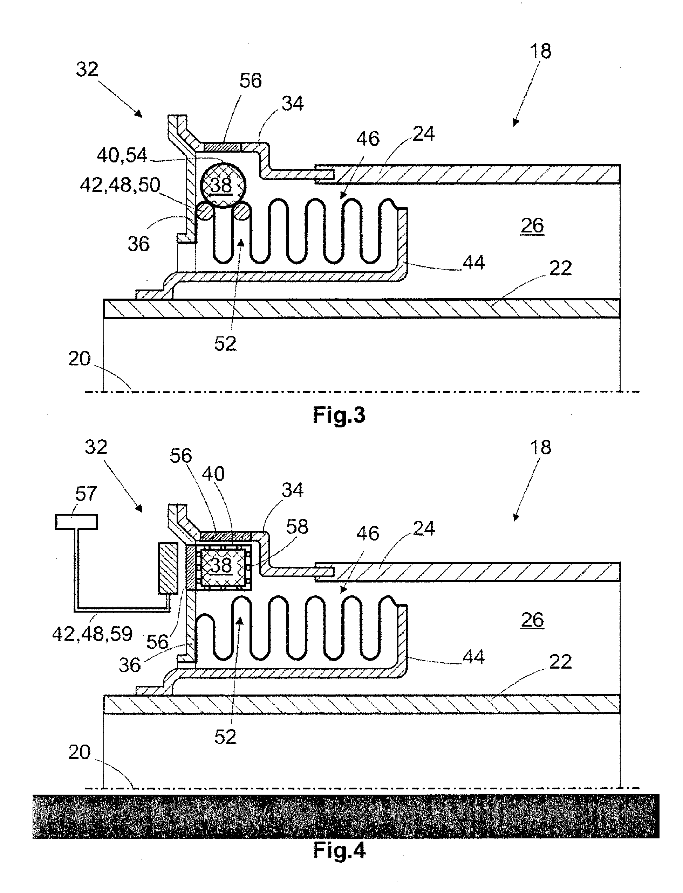

In Figur 3 ist ein erstes Ausführungsbeispiel des erfindungsgemäßen Absorberrohres 18 gezeigt. Die Temperaturänderungsvorrichtung 42 ist als die Heizvorrichtung 48 ausgeführt, die einen Heizdraht 50 umfasst, der wiederum in Falten 52 des Faltenbalges 46 verlegt ist. Hier liegt der Außenring 36 nicht am Anschlusselement 44 an, so dass der Faltenbalg 46 auf der vom Ringraum 26 abgewandten Seite zugänglich ist. Der Behälter 40, in dem sich das Gettermaterial 38 befindet, ist als Gewebestrumpf 54 ausgeführt, der im Ringraum 26 auf den Faltenbalg 46 gelegt ist. Im Übergangselement 34 ist eine Membran 56 angeordnet, durch welche der freie Wasserstoff bei einer Änderung der Temperatur der Membran 56 hindurch diffundieren kann. Der Heizdraht 50 erwärmt durch den Faltenbalg 46 zunächst das Gettermaterial 38, das wiederum die Membran 56 erwärmt, so dass die Membran 56 indirekt beheizt wird.

In Figur 4 ist ein zweites Ausführungsbeispiel des Absorberrohres 18 gezeigt. Hier befindet sich das Gettermaterial 38 wiederum im Behälter 40, der eine Anzahl von Löchern 58 aufweist, die so dimensioniert sind, dass der freie Wasserstoff gut hindurch gelangen kann, das Gettermaterial 38 aber dennoch im Behälter 40 verbleibt. Sowohl das Übergangselement 34 als auch der Außenring 36 weisen die Membran 56 auf. Die Temperaturänderungsvorrichtung 42 ist in diesem Fall als eine Heatpipe oder als ein Photovoltaik-Modul 59 ausgeführt. Diese dienen zum Wärmetransport über längere Distanzen. So ermöglichen sie, die Wärme an beliebigen Stellen zu produzieren und dorthin zu führen, wo sie benötigt wird. Anders herum können sie auch Wärme von Stellen abführen, die gekühlt werden müssen. Im vorliegenden Fall wird die Wärme an einem Ende 57 der Heatpipe 59 erzeugt und in unmittelbarer Nähe der Membran 56 des Außenrings 36 abgegeben. Dadurch wird diese zunächst erwärmt, so dass das Gettermaterial 38 hier indirekt erwärmt wird. Sinngemäß gilt dies auch für eine Herabsetzung der Temperatur. Das Photovoltaik-Modul 59 ermöglicht weiterhin die sehr günstige und umweltfreundliche Erzeugung von Wärme.

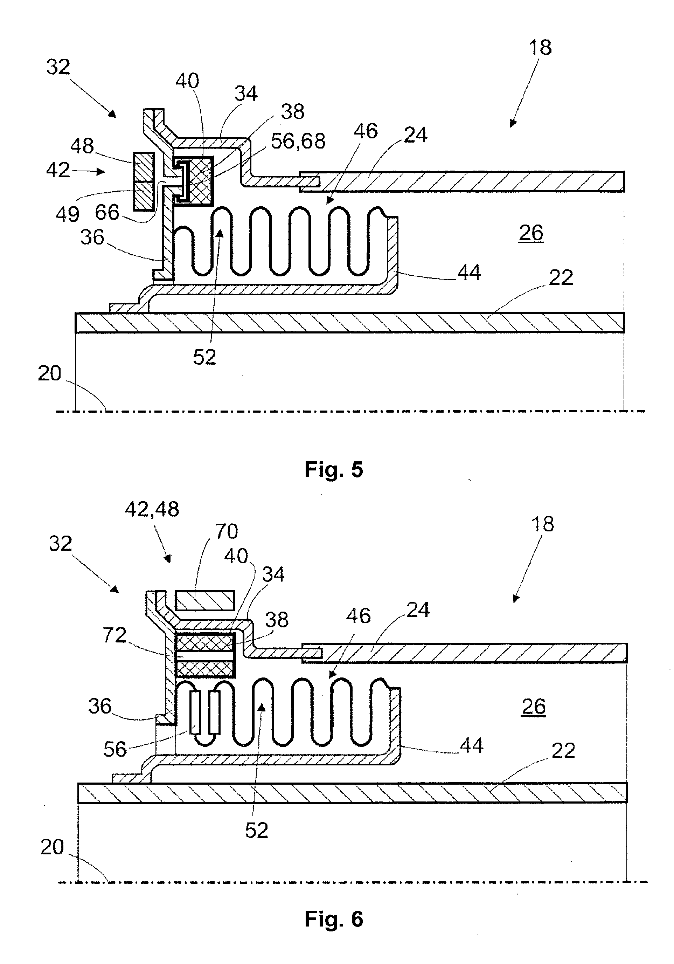

In Figur 5 ist ein weiteres Ausführungsbeispiel des erfindungsgemäßen Absorberrohres 18 gezeigt. Hierin weist der Außenring 36 eine Öffnung 66 auf, welche in das Gettermaterial 38 ragt und von der Membran 56 verschlossen wird. Im dargestellten Beispiel ist die Membran 56 als Kappe 68 ausgeführt, welche die Öffnung 66 verschließt. Die Temperaturänderungsvorrichtung 42 ist in unmittelbarer Nähe der Öffnung 66 angeordnet, so dass sie die Temperatur der Membran 56 und des Gettermaterials 38 ändern kann.

Beim in Figur 6 dargestellten weiteres Ausführungsbeispiel des Absorberrohres 18 umfasst die Temperaturänderungsvorrichtung 42 eine elektrische Spule 70 und eine Metallscheibe 72. Die Metalischeibe 72 und die elektrische Spule 70 sind so eingerichtet, dass die Metallscheibe 72 induktiv mit der elektrischen Spule 70 beheizt werden kann. Die Metallscheibe 72 ist dabei im Gettermaterial 38 angeordnet, so dass das Gettermaterial 38 direkt erwärmt werden kann. Die Membran 56 ist in diesem Ausführungsbeispiel im Faltenbalg 46 angeordnet und wird über das Gettermaterial 38 indirekt erwärmt.

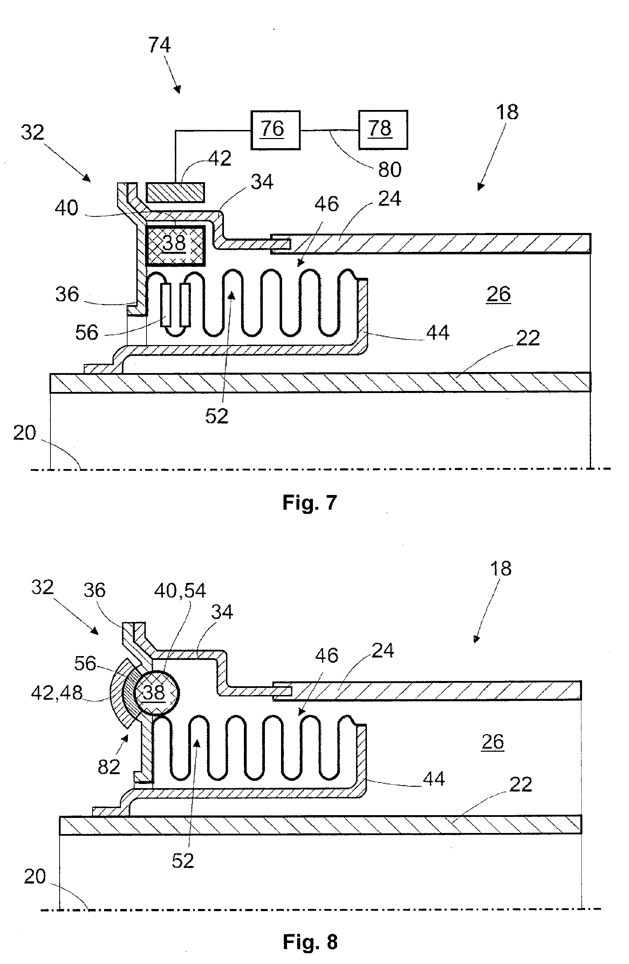

In Figur 7 ist eine Vorrichtung 74 zum Abführen von freiem Wasserstoff aus einem Ringraum 26 eines Absorberrohres 18 schematisch dargestellt. Sie umfasst das Absorberrohr 18 gemäß dem in Figur 6 dargestellten weiteres Ausführungsbeispiel, wobei auch alle anderen Ausführungsbeispiele verwendbar sind. Die Temperaturänderungsvorrichtung 42 ist mit einer Vergleichseinheit 76 verbunden, die wiederum an einer Temperaturmesseinheit 78 angeschlossen ist. Die Verbindung ist dabei über Kabel 80 realisiert, wobei eine drahtlose Verbindung ebenfalls denkbar ist. Als Vergleichseinheit 76 kann ein Rechner oder Mikrocomputer dienen, eine Temperaturmesseinheit 78 kann als Wärmebildkamera oder Temperatursensor ausgebildet sein.

Die Temperaturmesseinheit 78 ermittelt den Wert der Temperatur des Hüllrohres 24 und leitet den ermittelten Wert an die Vergleichseinheit 76 weiter, welche diesen mit einem wählbaren und in die Vergleichseinheit 76 eingebbaren kritischen Temperaturwert vergleicht. Übersteigt der ermittelte Temperaturwert des Hüllrohres 24 den kritischen Temperaturwert, ist dies ein Zeichen für eine Anreicherung von freiem Wasserstoff im Ringraum 26 des Absorberrohres 18 und für eine Erschöpfung der Aufnahmekapazität des Gettermaterials 38 für freien Wasserstoff. In diesem Fall kann die Vergleichseinheit 76 die Temperaturänderungsvorrichtung 42 dazu veranlassen, die Temperatur des Gettermaterials 38 herabzusetzen, um so seine Aufnahmekapazität zu erhöhen. Alternativ kann die Vergleichseinheit 76 eine Erhöhung der Temperatur des Gettermaterials 38 und der Wandung 32 bewirken, wodurch der gebundene Wasserstoff vom Gettermaterial 38 losgelöst und durch die Membran 56 aus dem Ringraum 26 abgeführt wird.

Bei dem in Figur 8 dargestellte Ausführungsbeispiel weist der Außenring 36 einen Abschnitt 82 auf, der das Gettermaterial 38 zumindest teilweise umschließt. Die Membran 56 ist im dargestellten Beispiel im Bereich 82 angeordnet. Die Temperaturänderungseinheit 42, die beispielsweise als die Heizvorrichtung 48 ausgeführt ist, ist ebenfalls in diesem Bereich 82 angeordnet.

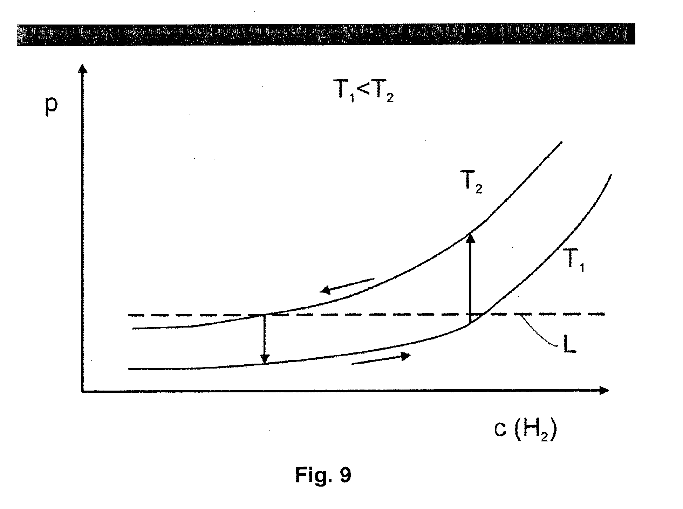

In Figur 9 ist das Verfahren zum reversiblen Be- und Entladen eines Gettermaterials 38 mit freiem Wasserstoff graphisch dargestellt. Hier ist die Abhängigkeit des Drucks p im Ringraum 26 bei einer isotherm verlaufenden Erhöhung der Konzentration des freien Wasserstoffs im Gettermaterial 38 für eine erste Temperatur T₁ und eine zweite Temperatur T₂ des Gettermaterials 38 aufgetragen. Die erste Temperatur T₁ ist dabei niedriger als die zweite Temperatur T₂. Eine Linie L markiert dabei die maximale Aufnahmekapazität des Gettermaterials 38 für freien Wasserstoff. Man erkennt, dass die Aufnahmekapazität des Gettermaterials 38 bei der geringeren Temperatur T₁ höher ist als bei der höheren Temperatur T₂ (Schnittpunkte der Isothermen mit der Linie L).

Der in den Ringraum eintretende Wasserstoff wird solange am Gettermaterial 38 gebunden, bis die maximale Aufnahmekapazität des Gettermaterials 38 erreicht ist. Diese Beladung findet im dargestellten Beispiel bei der Temperatur T₁ statt. Bei Erreichen der maximalen Aufnahmekapazität bei der ersten Temperatur T₁ oder, wie dargestellt, kurz davor, wird durch Aktivieren der Temperaturänderungsvorrichtung 42 die Temperatur des Gettermaterials 38 von oder ersten Temperatur T₁ auf die zweite Temperatur T₂ erhöht. Die Erhöhung der Temperatur vor dem Erreichen der maximalen Aufnahmekapazität verhindert die Partikelbildung des Gettermaterials. Bei der zweiten Temperatur T₂ hat das Gettermaterial 38 eine geringere Aufnahmekapazität, so dass soviel des gebundenen freien Wasserstoffes freigesetzt wird, bis dass die maximale Aufnahmekapazität des Gettermaterial 38 bei der zweiten Temperatur T₂ erreicht wird. An diesem Punkt (Schnittpunkt der Isotherme T₂ mit L) wird die Temperatur des Gettermaterials 38 auf die erste Temperatur T₁ herabgesetzt, bei der die Aufnahmekapazität höher ist, so dass das Gettermaterial 38 weiteren freien Wasserstoff aufnehmen kann.

Die Änderungen der Temperatur des Gettermaterials 38 gehen einher mit Änderungen der Temperatur der Wandung 32 und/oder der Membran 56 und/oder des Faltenbalges 46. Da die Wandung 32 üblicherweise zumindest teilweise aus Metall, insbesondere aus eisenhaltigen Werkstoffen, hergestellt ist, weist sie eine temperaturabhängige Permeabilität auf, die sich mit steigender Temperatur erhöht. Selbiges gilt auch für den Faltenbalg 46, sofern er aus metallischen Werkstoffen hergestellt ist sowie für die Membran 56 und den dotierten Bereich 64 der Wandung 32 oder des Faltenbalges 46.

Die Erfindung ist anhand mehrerer bevorzugter Ausführungsbeispiele im Detail beschrieben worden. Sich für den Fachmann aus der Beschreibung in naheliegender Weise ergebende Modifikationen oder Variationen weichen von der der Erfindung zugrundeliegenden Idee nicht ab und sind vom Schutzumfang umfasst, der von folgenden Ansprüchen definiert wird.

### Bezugszeichenliste

- 10: Sonnenkollektor
- 12: Kollektorspiegel
- 14: Sonneneinstrahlung
- 18: reflektierte Sonneneinstrahlung
- 18: Absorberrohr

- 20: Längsachse
- 22: Metallrohr
- 24: Hüllrohr
- 26: Ringraum
- 28: dem Kollektorspiegel zugewandet Hälfte des Absorberrohres

- 30: dem Kollektorspiegel abgewandte Hälfte des Absorberrohres
- 32: Wandung
- 34: Übergangselement
- 36: Außenring
- 38: Gettermaterial

- 40: Behälter
- 42: Temperaturänderungsvorrichtung
- 44: Anschlusselement
- 46: Faltenbalg
- 48: Heizvorrichtung
- 49: Kühlvorrichtung

- 50: Heizdraht
- 52: Falten
- 54: Gewebestrumpf
- 56: Membran
- 57: Ende
- 58: Löcher
- 59: Heatpipe, Photovoltaik-Modul

- 60: Vorsprung
- 62: Ausnehmung
- 64: dotierter Bereich
- 66: Öffnung des Außenrings
- 68: Kappe

- 70: elektrische Spule
- 72: Metallscheibe
- 74: Vorrichtung
- 76: Vergleichseinheit
- 78: Temperaturmesseinheit

- 80: Kabel
- 82: Abschnitt

- L: Linie
- T₁: erste Temperatur
- T₂: zweite Temperatur

## Patentansprüche

1. Absorberrohr, insbesondere für Sonnenkollektoren (10) in solarthermischen Kraftwerken, umfassend
- ein Metallrohr (22) zum Durchleiten und Erhitzen eines Wärmeträgermediums,
- ein das Metallrohr (22) umgebendes Hüllrohr (24) zum Ausbilden eines evakuierbaren Ringraumes (26),
- eine zwischen dem Hüllrohr (24) und dem Metallrohr verlaufende Wandung (32) zum Abdichten des Ringraumes (26), und
- ein Gettermaterial (38) zum Binden von sich im Ringraum (26) befindendem freien Wasserstoff,
**gekennzeichnet durch** eine Temperaturänderungsvorrichtung (42) zum Ändern der Temperatur des Gettermaterials (38) und der Wandung (32) und
**durch** eine für den freien Wasserstoff durchdringbare Membran (56) zum Abführen des freien Wasserstoffes aus dem Ringraum (26), wobei die Temperaturänderungsvorrichtung (42) die Temperatur der Membran (56) ändert.

2. Absorberrohr nach Anspruch 1, wobei das Gettermaterial (38) im Ringraum (26) angeordnet ist,
**dadurch gekennzeichnet, dass** die Temperaturänderungsvorrichtung (42) außerhalb des Ringraums (26) und gegenüber dem Gettermaterial (38) angeordnet ist.

3. Absorberrohr nach Anspruch 1 oder 2, wobei die Wandung (32) ein Übergangselement (34) und einen Außenring (36) umfasst,
**dadurch gekennzeichnet, dass** die Membran (56) im oder am Übergangselement (34) und/oder dem Außenring (36) angeordnet ist.

4. Absorberrohr nach einem der Ansprüche 1 bis 3, wobei das Absorberrohr (18) einen Faltenbalg (46) zum Ausgleichen der unterschiedlichen Ausdehnungen des Hüllrohres (24) und des Metallrohres (22) aufweist,
**dadurch gekennzeichnet, dass** die Membran (56) im oder am Faltenbalg (46) angeordnet ist.

5. Absorberrohr nach einem der Ansprüche 1 bis 4,
**dadurch gekennzeichnet, dass** die Membran (56) Eisen, Palladium oder Niob enthält.

6. Absorberrohr nach einem der Ansprüche 3 bis 5,
**dadurch gekennzeichnet, dass** das Gettermaterial (38) in einen Behälter (40) gefüllt ist, der am Außenring (36) und/oder am Übergangselement (34) befestigt ist.

7. Absorberrohr nach Anspruch 6,
**dadurch gekennzeichnet, dass** der Behälter (40) Löcher (58) zum Erhöhen der Zugänglichkeit des Gettermaterials (38) für den freien Wasserstoff im Ringraum (26) aufweist.

8. Absorberrohr nach Anspruch 6,
**dadurch gekennzeichnet, dass** der Behälter (40) als Gewebestrumpf (54) ausgebildet ist.

9. Absorberrohr nach einem der Ansprüche 3 bis 8,
**dadurch gekennzeichnet, dass** der Außenring (36) einen in das Gettermaterial (38) hineinragenden Vorsprung (60) aufweist und die Temperaturänderungsvorrichtung (42) im Bereich des Vorsprungs (60) angeordnet ist.

10. Absorberrohr nach Anspruch 9,
**dadurch gekennzeichnet, dass** der Außenring (36) eine Ausnehmung (62) im Bereich des Vorsprungs (60) aufweist, in welcher die Temperaturänderungsvorrichtung (42) verläuft.

11. Absorberrohr nach Anspruch 3 bis 10,
**dadurch gekennzeichnet, dass** der Außenring (36) eine in das Gettermaterial (38) weisende Öffnung (66) aufweist, die durch die Membran (56) verschlossen ist.

12. Absorberrohr nach einem der Ansprüche 3 bis 8,
**dadurch gekennzeichnet, dass** der Außenring (36) und/oder das Übergangselement (34) einen Abschnitt (82) aufweisen, der das Gettermaterial (38) zumindest teilweise umschließt.

13. Absorberrohr nach Anspruch 12,
**dadurch gekennzeichnet, dass** die Membran (56) im Abschnitt (82) angeordnet ist.

14. Absorberrohr nach Anspruch 12 oder 13,
**dadurch gekennzeichnet, dass** die Temperaturänderungsvorrichtung (42) an den Abschnitt (82) angrenzt.

15. Absorberrohr nach einem der Ansprüche 4 bis 14, wobei der Faltenbalg (46) einen oder mehrere Falten (52) aufweist,
**dadurch gekennzeichnet, dass** die Temperaturänderungsvorrichtung (42) zumindest teilweise in den Falten (52) des Faltenbalges (46) verläuft.

16. Absorberrohr nach einem der vorherigen Ansprüche,
**dadurch gekennzeichnet, dass** die Temperaturänderungsvorrichtung (42) als Heizvorrichtung (48) ausgeführt ist.

17. Absorberrohr nach Anspruch 16,
**dadurch gekennzeichnet, dass** die Heizvorrichtung (48) einen Heizdraht (50) umfasst.

18. Absorberrohr nach Anspruch 17,
**dadurch gekennzeichnet, dass** die Heizvorrichtung (48) eine elektrische Spule (70) und eine Metallscheibe (72) zum induktiven Beheizen des Gettermaterials (38) umfasst.

19. Absorberrohr nach einem der vorherigen Ansprüche,
**dadurch gekennzeichnet, dass** die Temperaturänderungsvorrichtung (42) eine Heat-Pipe (59) und/oder ein Photovoltaik-Modul (59) umfasst.

20. Absorberrohr nach einem der vorherigen Ansprüche,
**dadurch gekennzeichnet, dass** die Temperaturänderungsvorrichtung (42) eine Kühlvorrichtung (49) umfasst.

21. Verfahren zum Ändern der Temperatur eines Gettermaterials (38) in einem Ringraum (26) eines Absorberrohres (18), umfassend folgende Schritte:
- Ändern der Temperatur einer Membran (56) und/oder einer Wandung (32) mittels einer Temperaturänderungsvorrichtung (42), und
- Ändern der Temperatur des Gettermaterials (38) mittels der Membran (56).

22. Verfahren zum Ändern der Temperatur einer Membran (56) eines Absorberrohres, umfassend folgende Schritte:
- Ändern der Temperatur eines Gettermaterials (38) mittels einer Temperaturänderungsvorrichtung (42), und
- Ändern der Temperatur der Membran (56) mittels des Gettermaterials (38).

23. Verfahren nach Anspruch 21 oder 22 zum reversiblen Be- und Entladen eines Gettermaterials (38) mit freiem Wasserstoff in einem Absorberrohr umfassend folgende Schritte:
- Beladen des Gettermaterials (38) bei einer ersten Temperatur (T₁),
- Ändern der Temperatur des Gettermaterials (38) auf eine zweite Temperatur (T₂) mittels einer Temperaturänderungsvorrichtung (42),
- Entladen des Gettermaterials (38) bei der zweiten Temperatur (T₂), und
- Ändern der Temperatur des Gettermaterials (38) auf die erste Temperatur (T₁) mittels der Temperaturänderungsvorrichtung (42).

24. Vorrichtung zum Abführen von freiem Wasserstoff aus einem Ringraum (26) eines Absorberrohres, umfassend
- ein Absorberrohr (18) nach einem der vorherigen Ansprüche 1 - 20,
- eine Temperaturmesseinheit (78) zum Ermitteln des Temperaturwertes des Hüllrohres (24), und
- eine Vergleichseinheit (76) zum Vergleichen des ermittelten Temperaturwertes des Hüllrohres (24) mit einem wählbaren kritischen Temperaturwert.

25. Verfahren zum Abführen von freiem Wasserstoff aus einem Ringraum (26) eines Absorberrohres, umfassend folgende Schritte:
- Ermitteln des Temperaturwertes des Hüllrohres (24) mittels einer Temperaturmesseinheit (78),
- Vergleichen des ermittelten Temperaturwertes mit einem wählbaren kritischen Temperaturwert mithilfe einer Vergleichseinheit (76), und
- Ändern der Temperatur des Gettermaterials (38) und der Wandung (32) und/oder der Membran (56) mit der Temperaturänderungsvorrichtung (42) derart, dass der am Gettermaterial (38) gebundene Wasserstoff freigesetzt und aus dem Ringraum (26) abgeführt wird.

## Claims

1. Absorber tube, in particular for solar collectors (10) in solar thermal power plants, comprising
- a metal tube (22) for conducting and heating a heat carrier medium,
- an envelope tube (24) which surrounds the metal tube (22) and which serves to form an evacuable annular space (26),
- a wall (32) which runs between the envelope tube (24) and the metal tube and which serves to seal off the annular space (26), and
- a getter material (38) for binding free hydrogen that is present in the annular space (26),
**characterized by** a temperature change device (42) for changing the temperature of the getter material (38) and of the wall (32), and
by a diaphragm (56) which is permeable to the free hydrogen and which serves for purging the free hydrogen from the annular space (26), wherein the temperature change device (42) changes the temperature of the diaphragm (56).

2. Absorber tube according to Claim 1, wherein the getter material (38) is arranged in the annular space (26),
**characterized in that** the temperature change device (42) is arranged outside the annular space (26) and opposite the getter material (38).

3. Absorber tube according to Claim 1 or 2, wherein the wall (32) comprises a transition element (34) and an outer ring (36),
**characterized in that** the diaphragm (56) is arranged in or on the transition element (34) and/or the outer ring (36).

4. Absorber tube according to one of Claims 1 to 3, wherein the absorber tube (18) has a corrugated bellows (46) for compensation of the different expansions of the envelope tube (24) and of the metal tube (22),
**characterized in that** the diaphragm (56) is arranged in or on the corrugated bellows (46).

5. Absorber tube according to one of Claims 1 to 4, **characterized in that** the diaphragm (56) comprises iron, palladium or niobium.

6. Absorber tube according to one of Claims 3 to 5,
**characterized in that** the getter material (38) is provided in a container (40) which is fastened to the outer ring (36) and/or to the transition element (34).

7. Absorber tube according to Claim 6,
**characterized in that** the container (40) has holes (58) for improving access to the getter material (38) for the free hydrogen in the annular space (26).

8. Absorber tube according to Claim 6,
**characterized in that** the container (40) is in the form of a fabric stocking (54).

9. Absorber tube according to one of Claims 3 to 8,
**characterized in that** the outer ring (36) has a projection (60) which projects into the getter material (38), and the temperature change device (42) is arranged in the region of the projection (60).

10. Absorber tube according to Claim 9,
**characterized in that** the outer ring (36) has a recess (62) in the region of the projection (60), and the temperature change device (42) runs in said recess.

11. Absorber tube according to Claim 3 to 10,
**characterized in that** the outer ring (36) has an opening (66) which points into the getter material (38) and which is closed by the diaphragm (56).

12. Absorber tube according to one of Claims 3 to 8,
**characterized in that** the outer ring (36) and/or the transition element (34) have/has a section (82) which at least partially surrounds the getter material (38).

13. Absorber tube according to Claim 12,
**characterized in that** the diaphragm (56) is arranged in the section (82).

14. Absorber tube according to Claim 12 or 13,
**characterized in that** the temperature change device (42) adjoins the section (82).

15. Absorber tube according to one of Claims 4 to 14, wherein the corrugated bellows (46) has one or more corrugations (52),
**characterized in that** the temperature change device (42) runs at least partially in the corrugations (52) of the corrugated bellows (46).

16. Absorber tube according to one of the preceding claims,
**characterized in that** the temperature change device (42) is in the form of a heating device (48).

17. Absorber tube according to Claim 16,
**characterized in that** the heating device (48) comprises a heating wire (50).

18. Absorber tube according to Claim 17,
**characterized in that** the heating device (48) comprises an electrical coil (70) and a metal disc (72) for inductive heating of the getter material (38).

19. Absorber tube according to one of the preceding claims,
**characterized in that** the temperature change device (42) comprises a heat pipe (59) and/or a photovoltaic module (59).

20. Absorber tube according to one of the preceding claims,
**characterized in that** the temperature change device (42) comprises a cooling device (49).

21. Method for changing the temperature of a getter material (38) in an annular space (26) of an absorber tube (18), comprising the following steps:
- changing the temperature of a diaphragm (56) and/or of a wall (32) by means of a temperature change device (42), and
- changing the temperature of the getter material (38) by means of the diaphragm (56).

22. Method for changing the temperature of a diaphragm (56) of an absorber tube, comprising the following steps:
- changing the temperature of a getter material (38) by means of a temperature change device (42), and
- changing the temperature of the diaphragm (56) by means of the getter material (38).

23. Method according to Claim 21 or 22 by which a getter material (38) is charged with, and has discharged therefrom, free hydrogen in an absorber tube in a reversible manner, comprising the following steps:
- charging the getter material (38) at a first temperature (T₁),
- changing the temperature of the getter material (38) to a second temperature (T₂) by means of a temperature change device (42),
- discharging the getter material (38) at the second temperature (T₂), and
- changing the temperature of the getter material (38) to the first temperature (T₁) by means of the temperature change device (42).

24. Device for purging free hydrogen from an annular space (26) of an absorber tube, comprising
- an absorber tube (18) according to one of the preceding Claims 1 - 20,
- a temperature measuring unit (78) for determining the temperature value of the envelope tube (24), and
- a comparison unit (76) for comparing the determined temperature value of the envelope tube (24) with a selectable critical temperature value.

25. Method for purging free hydrogen from an annular space (26) of an absorber tube, comprising the following steps:
- determining the temperature value of the envelope tube (24) by means of a temperature measuring unit (78),
- comparing the determined temperature value with a selectable critical temperature value by means of a comparison unit (76), and
- changing the temperature of the getter material (38) and of the wall (32) and/or of the diaphragm (56) by means of the temperature change device (42) such that hydrogen bound in the getter material (38) is released and purged from the annular space (26).

## Revendications

1. Tube absorbeur, en particulier pour panneaux solaires (10) dans des centrales thermiques solaires, comprenant :
- un tube métallique (22) pour conduire et chauffer un fluide caloporteur,
- un tube d'enveloppe (24) entourant le tube métallique (22) pour réaliser un espace annulaire pouvant être évacué (26),
- une paroi (32) s'étendant entre le tube d'enveloppe (24) et le tube métallique pour réaliser l'étanchéité de l'espace annulaire (26), et
- un matériau getter (38) pour lier l'hydrogène libre se trouvant dans l'espace annulaire (26),
**caractérisé par** un dispositif de variation de température (42) pour faire varier la température du matériau getter (38) et de la paroi (32) et par une membrane (56) pouvant être traversée par l'hydrogène libre pour évacuer l'hydrogène libre hors de l'espace annulaire (26), le dispositif de variation de température (42) faisant varier la température de la membrane (56).

2. Tube absorbeur selon la revendication 1, dans lequel le matériau getter (38) est disposé dans l'espace annulaire (26),
**caractérisé en ce que** le dispositif de variation de température (42) est disposé à l'extérieur de l'espace annulaire (26) et en face du matériau getter (38).

3. Tube absorbeur selon la revendication 1 ou 2, dans lequel la paroi (32) comprend un élément de transition (34) et une bague extérieure (36), **caractérisé en ce que** la membrane (56) est disposée dans ou sur l'élément de transition (34) et/ou la bague extérieure (36).

4. Tube absorbeur selon l'une quelconque des revendications 1 à 3, dans lequel le tube absorbeur (18) présente un soufflet (46) pour compenser les dilatations différentes du tube d'enveloppe (24) et du tube métallique (22), **caractérisé en ce que** la membrane (56) est disposée dans ou sur le soufflet (46).

5. Tube absorbeur selon l'une quelconque des revendications 1 à 4,
**caractérisé en ce que** la membrane (56) contient du fer, du palladium ou du niobium.

6. Tube absorbeur selon l'une quelconque des revendications 3 à 5,
**caractérisé en ce que** le matériau getter (38) remplit un récipient (40), qui est fixé à la bague extérieure (36) et/ou à l'élément de transition (34).

7. Tube absorbeur selon la revendication 6,
**caractérisé en ce que** le récipient (40) présente des trous (58) pour augmenter l'accessibilité du matériau getter (38) à l'hydrogène libre dans l'espace annulaire (26).

8. Tube absorbeur selon la revendication 6,
**caractérisé en ce que** le récipient (40) est réalisé sous forme de manchon tissé (54).

9. Tube absorbeur selon l'une quelconque des revendications 3 à 8,
**caractérisé en ce que** la bague extérieure (36) présente une saillie (60) pénétrant à l'intérieur du matériau getter (38) et le dispositif de variation de température (42) est disposé dans la région de la saillie (60).

10. Tube absorbeur selon la revendication 9,
**caractérisé en ce que** la bague extérieure (36) présente un évidement (62) dans la région de la saillie (60), 1 dans lequel évidement s'étend le dispositif de variation de température (42).

11. Tube absorbeur selon les revendications 3 à 10,
**caractérisé en ce que** la bague extérieure (36) présente une ouverture (66) tournée vers le matériau getter (38), laquelle est fermée par la membrane (56).

12. Tube absorbeur selon l'une quelconque des revendications 3 à 8,
**caractérisé en ce que** la bague extérieure (36) et/ou l'élément de transition (34) présentent une portion (82) qui entoure au moins en partie le matériau getter (38).

13. Tube absorbeur selon la revendication 12,
**caractérisé en ce que** la membrane (56) est disposée dans la portion (82).

14. Tube absorbeur selon la revendication 12 ou 13,
**caractérisé en ce que** le dispositif de variation de température (42) est adjacent à la portion (82).

15. Tube absorbeur selon l'une quelconque des revendications 4 à 14, dans lequel le soufflet (46) présente un ou plusieurs plis (52), **caractérisé en ce que** le dispositif de variation de température (42) s'étend au moins en partie dans les plis (52) du soufflet (46).

16. Tube absorbeur selon l'une quelconque des revendications précédentes,
**caractérisé en ce que** le dispositif de variation de température (42) est réalisé sous forme de dispositif de chauffage (48).

17. Tube absorbeur selon la revendication 16,
**caractérisé en ce que** le dispositif de chauffage (48) comprend un filament chauffant (50).

18. Tube absorbeur selon la revendication 17,
**caractérisé en ce que** le dispositif de chauffage (48) comprend une bobine électrique (70) et un disque métallique (72) pour le chauffage inductif du matériau getter (38).

19. Tube absorbeur selon l'une quelconque des revendications précédentes,
**caractérisé en ce que** le dispositif de variation de température (42) comprend un tuyau chauffant (59) et/ou un module photovoltaïque (59).

20. Tube absorbeur selon l'une quelconque des revendications précédentes,
**caractérisé en ce que** le dispositif de variation de température (42) comprend un dispositif de refroidissement (49).

21. Procédé pour faire varier la température d'un matériau getter (38) dans un espace annulaire (26) d'un tube absorbeur (18), comprenant les étapes suivantes :
- variation de la température d'une membrane (56) et/ou d'une paroi (32) au moyen d'un dispositif de variation de température (42), et
- variation de la température du matériau getter (38) au moyen de la membrane (56).

22. Procédé pour faire varier la température d'une membrane (56) d'un tube absorbeur, comprenant les étapes suivantes :
- variation de la température d'un matériau getter (38) au moyen d'un dispositif de variation de température (42), et
- variation de la température de la membrane (56) au moyen du matériau getter (38).

23. Procédé selon la revendication 21 ou 22 pour la charge et la décharge réversibles d'un matériau getter (38) avec de l'hydrogène libre dans un tube absorbeur, comprenant les étapes suivantes :
- charge du matériau getter (38) à une première température (T₁),
- variation de la température du matériau getter (38) à une deuxième température (T₂) au moyen d'un dispositif de variation de température (42),
- décharge du matériau getter (38) à la deuxième température (T₂), et
- variation de la température du matériau getter (38) à la première température (T₁) au moyen du dispositif de variation de température (42).

24. Dispositif pour évacuer de l'hydrogène libre hors d'un espace annulaire (26) d'un tube absorbeur, comprenant :
- un tube absorbeur (18) selon l'une quelconque des revendications 1 à 20,
- une unité de mesure de température (78) pour déterminer la valeur de température du tube d'enveloppe (24), et
- une unité de comparaison (76) pour comparer la valeur de température déterminée du tube d'enveloppe (24) avec une valeur de température critique sélectionnable.

25. Procédé pour évacuer de l'hydrogène libre hors d'un espace annulaire (26) d'un tube absorbeur, comprenant les étapes suivantes :
- détermination de la valeur de température du tube d'enveloppe (24) au moyen d'une unité de mesure de température (78),
- comparaison de la valeur de température déterminée avec une valeur de température critique sélectionnable à l'aide d'une unité de comparaison (76), et
- variation de la température du matériau getter (38) et de la paroi (32) et/ou de la membrane (56) avec le dispositif de variation de température (42) de telle sorte que l'hydrogène lié au matériau getter (38) soit libéré et soit évacué hors de l'espace annulaire (26).
